(19) Europäisches Patentamt / European Patent Office / Office européen des brevets

(11) **EP 4 411 331 A1**

(12) **EUROPEAN PATENT APPLICATION**
published in accordance with Art. 153(4) EPC

(43) Date of publication:
07.08.2024 Bulletin 2024/32

(21) Application number: 22875468.5

(22) Date of filing: 10.06.2022

(51) International Patent Classification (IPC):
*G01H 3/00* (2006.01)      *G01B 21/00* (2006.01)
*G01B 3/02* (2020.01)

(52) Cooperative Patent Classification (CPC):
G01B 3/02; G01B 21/00; G01H 3/00

(86) International application number:
PCT/JP2022/023541

(87) International publication number:
WO 2023/053589 (06.04.2023 Gazette 2023/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 01.10.2021 JP 2021162655

(71) Applicant: Espacio Consultant Corp.
Tokyo 104-0033 (JP)

(72) Inventors:
• HIGASHIONNA Dan
  Tokyo 104-0033 (JP)
• YAMAZAKI Tomoya
  Tokyo 104-0033 (JP)

(74) Representative: Hoffmann Eitle
Patent- und Rechtsanwälte PartmbB
Arabellastraße 30
81925 München (DE)

(54) **SOUND LEVEL PREDICTING TOOL, AND SOUND LEVEL PREDICTING METHOD**

(57) An object of the present invention is to provide a sound level estimating tool capable of easily estimating a sound level of a noise source at a predetermined position on a map. An object of the present invention is to provide a sound level estimating method capable of easily estimating a sound level of a noise source at a predetermined position on a map.

A sound level estimating tool used in contact with a predetermined scale map, the sound level estimating tool comprising: a reference point or a reference line corresponding to a position of a sound source in a real world; and an estimation point or an estimation line corresponding to a position in the real world where sound generated from the sound source is received, the sound level estimating tool indicating that, when at least a part of the reference point or the reference line and at least a part of the estimation point or the estimation line are brought into contact with the map, sound generated from the sound source at a real position corresponding to a position on the map in contact with at least a part of the reference point or the reference line is received at a predetermined sound level at a real position corresponding to a position on the map in contact with at least a part of the estimation point or the estimation line.

FIG. 5

EP 4 411 331 A1

**Description**

Technical Field

The present invention relates to a sound level estimating tool and a sound level estimating method.

Background Art

In designing facilities such as a commercial facility, a facility is designed in consideration of noise estimated at a plurality of spots for each noise source in advance. For example, in the guideline of the Large-Scale Retail Stores Location Law, standard values are defined according to an area type and a time category on the basis of environmental standards for noise (the Ministry of the Environment). In the Large-Scale Retail Stores Location guideline, it is desirable to estimate a sound level at a site boundary line and also estimate a sound level outdoors such as a residence. It is necessary to consider measures against noise (store planning) by comparing the estimation results of these sound levels with the standard values indicated in the guideline.

Incidentally, a reduced scale on which an actual feeling of distance can be grasped from the distance of a scaled map has previously been disclosed (refer to Patent Literature 1). However, it is very troublesome and time-consuming to calculate a sound level of a sound source of noise and a distance necessary for obtaining a standard sound level, and then check the distance against a distance corresponding to a map scale. Furthermore, in a case where there are a plurality of noise sources to be considered, checking whether the standard values are satisfied at the spots of surrounding buildings for each of the noise sources is a vast amount of work, which gives a large burden to a worker. That is, no tool for improving the efficiency of checking the standard related to a sound level has been proposed, and a needs exists for a tool capable of easily estimating a sound level on a map.

Citation List

Patent Literature

Patent Literature 1: JP 3149485 U

Summary of Invention

Technical Problem

The present invention has been made to solve such a problem. That is, an object of the present invention is to provide a sound level estimating tool and a sound level estimating method capable of easily estimating that sound generated from a sound source at a real position corresponding to a predetermined position on a map is received at a predetermined sound level at a real position corresponding to a position on the map.

Solution to Problem

The above objects are achieved by providing the following:

[1] A sound level estimating tool used in contact with a predetermined scale map, the sound level estimating tool comprising: a reference point or a reference line corresponding to a position of a sound source in a real world; and an estimation point or an estimation line corresponding to a position in the real world where sound generated from the sound source is received, the sound level estimating tool indicating that, when at least a part of the reference point or the reference line and at least a part of the estimation point or the estimation line are brought into contact with the map, sound generated from the sound source at a real position corresponding to a position on the map in contact with at least a part of the reference point or the reference line is received at a predetermined sound level at a real position corresponding to a position on the map in contact with at least a part of the estimation point or the estimation line;

[2] The sound level estimating tool according to [1], the sound level estimating tool being used in contact with each of maps with different scales, the sound level estimating tool further comprising two or more of the estimation points or the estimation lines, each of the estimation points or the estimation lines corresponding to a respective one of the maps with different scales, the sound level estimating tool indicating that, when at least a part of the reference point or the reference line and at least a part of the estimation point or the estimation line corresponding to one scale map among the maps with different scales are brought into contact with the one scale map, sound generated

EP 4 411 331 A1

from the sound source at a real position corresponding to a position on the one scale map in contact with at least a part of the reference point or the reference line is received at a predetermined sound level at a real position corresponding to a position on the one scale map in contact with at least a part of the estimation point or the estimation line corresponding to the one scale map;

[3] The sound level estimating tool according to [1], further comprising two or more of the estimation points or the estimation lines, the sound level estimating tool indicating that, when at least a part of the reference point or the reference line and at least a part of the estimation points or the estimation lines are brought into contact with the map, sound generated from the sound source at a real position corresponding to a position on the map in contact with at least a part of the reference point or the reference line is received at a different sound level at a real position corresponding to a position on the map in contact with at least a part of each of the estimation points or the estimation lines;

[4] The sound level estimating tool according to [1], further comprising two or more of the estimation points or the estimation lines, the sound level estimating tool indicating that, when at least a part of the reference point or the reference line and at least a part of the estimation points or the estimation lines are brought into contact with the map, sound generated from the sound source at a real position corresponding to a position on the map in contact with at least a part of the reference point or the reference line is received at a predetermined sound level at a real position corresponding to a position on the map in contact with at least a part of each of the estimation points or the estimation lines, each of the estimation points or the estimation lines corresponding to a different sound level generated from the sound source at the real position corresponding to the position on the map in contact with at least a part of the reference point or the reference line;

[5] A sound level estimating tool used in contact with a predetermined scale map, the sound level estimating tool comprising: a reference point or a reference line corresponding to a position of a sound source in a real world; and two or more estimation points or estimation lines corresponding to positions in the real world where sound generated from the sound source is received, the sound level estimating tool indicating that, when at least a part of the reference point or the reference line and at least a part of the estimation points or the estimation lines are brought into contact with the map, sound generated from the sound source at a real position corresponding to a position on the map in contact with at least a part of the reference point or the reference line attenuates by a predetermined sound level at a real position corresponding to a position on the map in contact with at least a part of each of the estimation points or the estimation lines;

[6] The sound level estimating tool according to any one of [1] and [3] to [5], wherein the sound level estimating tool has a plurality of faces, and on each of the plurality of faces, the reference point or the reference line and a plurality of the estimation points or the estimation lines corresponding to a predetermined map scale according to the face are described;

[7] The sound level estimating tool according to any one of [1] to [5], wherein the estimation line is a circle or an arc centered on the reference point, and the sound level estimating tool has a semicircular shape or a fan shape;

[8] A sound level estimating method using a sound level estimating tool including a reference point or a reference line corresponding to a position of a sound source in a real world, and an estimation point or an estimation line corresponding to a position in the real world where sound generated from the sound source is received, the sound level estimating method comprising:

bringing at least a part of the reference point or the reference line and at least a part of the estimation point or the estimation line into contact with a predetermined scale map, to estimate that sound generated from the sound source at a real position corresponding to a position on the map in contact with at least a part of the reference point or the reference line is received at a predetermined sound level at a real position corresponding to a position on the map in contact with at least a part of the estimation point or the estimation line.

[9] A sound level estimating method using a sound level estimating tool including a reference point or a reference line corresponding to a position where sound generated from a sound source in a real world is received, and an estimation line corresponding to a position of the sound source in the real world, the sound level estimating method comprising: bringing at least a part of the reference point or the reference line and at least a part of the estimation line into contact with a predetermined scale map, to estimate that sound generated from the sound source at a real position corresponding to a position on the map in contact with at least a part of a range including the reference point or the reference line surrounded by the estimation line is received at a predetermined sound level or more at a real position corresponding to a position on the map in contact with at least a part of the reference point.

Advantageous Effects of Invention

According to the present invention, a sound level estimating tool and a sound level estimating method capable of easily estimating that sound generated from a sound source at a real position corresponding to a predetermined position on a map is received at a predetermined sound level at a real position corresponding to a position on the map

3

can be provided.

Brief Description of Drawings

Fig. 1 is a schematic view illustrating an example of a sound level estimating tool according to an embodiment of the present invention.
Fig. 2 is a schematic view illustrating an example of the sound level estimating tool according to the embodiment of the present invention.
Fig. 3 is a schematic view illustrating an example of the sound level estimating tool according to the embodiment of the present invention.
Fig. 4 is a schematic view illustrating an example of the sound level estimating tool according to the embodiment of the present invention.
Fig. 5 is a schematic view illustrating an example of the sound level estimating tool according to the embodiment of the present invention.
Fig. 6 is a schematic view illustrating an example of the sound level estimating tool according to the embodiment of the present invention.
Fig. 7 is a schematic view illustrating an example of the sound level estimating tool according to the embodiment of the present invention.
Fig. 8 is a drawing illustrating one usage example of the sound level estimating tool according to the embodiment of the present invention.

Description of Embodiments

Hereinafter, embodiments of the invention will be described. The invention, however, is not limited to the following embodiments without departing from the spirit of the invention. Hereinafter, description relating to effects shows an aspect of the effects of the embodiments of the invention and does not limit the effects.

A sound level estimating tool according to the embodiment of the present invention includes a reference point or a reference line and an estimation line or an estimation point. The estimation line or the estimation point indicates a position on a map where sound generated at a position (sound source) in the real world corresponding to a position on the map overlapping the reference point or the reference line is received at an attenuated sound level in a case where the sound level estimating tool is superimposed on the map, and can be represented by a point or a line.

The sound level estimating tool includes one reference point or reference line. The reference point or the reference line indicates a position on a map corresponding to the position of a sound source in the real world, and can be represented by a point or a line. In addition, the sound level estimating tool is not particularly limited as long as it includes at least one estimation line or estimation line, but it is preferable that the sound level estimating tool includes two or more estimation lines or estimation points, for example. This makes it possible to estimate sound levels at a plurality of estimation spots corresponding to sound sources with a plurality of sound levels by using one sound level estimating tool. In addition, the sound level estimating tool can be used for maps with a plurality of scales.

For example, each of the two or more estimation lines or estimation points corresponds to a map with one scale, so that one sound level estimating tool can be used for maps with different scales. At this time, the sound level of a sound source generated at a position in the real world corresponding to the reference point or the reference line and the sound level received at a position in the real world corresponding to the estimation point or the estimation line are fixed. Therefore, it is preferable to provide a combination of a plurality of sound level estimating tools with different sound levels of a sound source and a plurality of sound level estimating tools with different estimated sound levels at the estimation point or the estimation line. Alternatively, each of the two or more estimation lines or estimation points corresponds to an estimated sound level at one estimation spot, so that one sound level estimating tool can be used to estimate sound levels at a plurality of estimation spots. At this time, the map scale to be used and the sound level of a sound source generated at a position in the real world corresponding to the reference point or the reference line are fixed. Therefore, it is preferable to provide a combination of a plurality of sound level estimating tools with different map scales to be used and a plurality of sound level estimating tools with different sound levels of a sound source. Alternatively, each of the two or more estimation lines or estimation points corresponds to a different sound level of a sound source generated at a position in the real world corresponding to the reference point or the reference line, so that one sound level estimating tool can be used to estimate an estimated sound level for a sound source with different sound levels. At this time, the map scale to be used and the sound level received at a position in the real world corresponding to the estimation point or the estimation line are fixed. Therefore, it is preferable to provide a combination of a plurality of sound level estimating tools with different map scales to be used and a plurality of sound level estimating tools with different estimated sound levels at the estimation point or the estimation line.

In addition, numerical values such as an estimated sound level of a sound source received at a spot on a map overlapping the estimation line or the estimation point, a sound level attenuated from a spot on a map overlapping the reference point or the reference line, a map scale with which the sound level estimating tool is used, and a sound level of a sound source assumed to be located at a spot on a map overlapping the reference point may be described in the sound level estimating tool. It is preferable that at least two or more of these indices are described. This allows a user to easily check the estimated sound level using the sound level estimating tool.

The sound level estimating tool according to the embodiment of the present invention preferably has a semicircular shape or a fan shape. The magnitude of a central angle of the fan shape is not particularly limited as long as it is 360° or less. Furthermore, the sound level estimating tool is preferably transparent or translucent. As a result, in a case where the sound level estimating tool is brought into contact with a predetermined scale map, a user can visually recognize the map and the contents described in the sound level estimating tool at the same time. In addition, the sound level estimating tool may be a ruler type or may have a shape similar to a triangular scale having a plurality of faces. The triangular scale typically has six faces, and has graduations corresponding to the distance of a map with a different scale on each face. The sound level estimating tool of triangular scale type according to the embodiment of the present invention similarly includes the estimation line indicating a degree of attenuation of a sound level from the reference point or the reference line corresponding to the distance of a map with a different scale on each face.

The sound level estimating tool according to the embodiment of the present invention is used by being brought into contact with a predetermined scale map. First, a predetermined position on the predetermined scale map corresponding to a position where a sound source exists in the real world, and at least a part of the reference point or the reference line of the sound level estimating tool are brought into contact with each other (also referred to as matched, superimposed, put together, or laid along). Then, a spot on the map with which at least a part of the estimation line or the estimation point is in contact is checked, so that it can be grasped that the sound level of the sound source at the real position is received at a predetermined sound level at a real position corresponding to the spot on the map. Alternatively, it can be grasped that the sound level of the sound source attenuates by a predetermined sound level at the real position corresponding to the spot on the map.

The sound level estimating tool according to the embodiment of the present invention can also be used by bringing a predetermined spot described on a predetermined scale map and at least a part of the reference point or the reference line into contact with each other. In this case, first, at least a part of the reference point or the reference line is brought into contact with the predetermined spot. Next, a spot on the map in contact with at least a part of the estimation line or the estimation point is checked. In a case where there is a sound source with a predetermined sound level on a line segment connecting the spot in contact with the reference point or the reference line and the spot in contact with the estimation line or the estimation point, it can be grasped that the sound level received at a real position corresponding to the position of the reference point or the reference line is equal to or more than a predetermined sound level. Alternatively, in a case where there is a sound source with a predetermined sound level on a straight line extending outward from the line segment connecting the spot in contact with the reference point or the reference line and the spot in contact with the estimation line or the estimation point, it can be grasped that the sound level received at a real position corresponding to the position of the reference point or the reference line is equal to or less than the predetermined sound level.

Here, the "reference point" corresponds to the position of a sound source in the real world. That is, the reference point is a point to be brought into contact with a spot where a sound source that is a noise generation source is located at a real position corresponding to a position on a predetermined scale map. In addition, the reference point may correspond to a position where a predetermined sound level is present. In addition, the reference point may be a point to be superimposed on a spot where a sound level is desired to be checked (also referred to as an estimation spot, an estimation position, a sound reception spot, and a sound reception position) at a real position corresponding to a position on a predetermined scale map. That is, the spot to be superimposed on the reference point is assumed to be a sound generation source and a sound level estimation spot. The "reference line" is a straight line including the reference point.

In the following, a spot where a sound source is located at a real position corresponding to a position on a predetermined scale map may be referred to as a spot where a sound source is located on a predetermined scale map, or the like. In addition, a spot where a received sound level of sound generated from a sound source is desired to be checked at a real position corresponding to a position on a predetermined scale map may be referred to as a spot where a sound level is desired to be checked on a predetermined scale map, an estimation spot, a sound reception spot, or the like.

The "spot where a sound source is located" is a spot estimated to be a noise generation source at a real position corresponding to a predetermined map. In addition, the spot can also be a spot where a sound source exists at a real position corresponding to a position on a map. For example, in the case of a parking lot, the spot is a spot through which a car passes. The spot can also be a spot at an entrance of the parking lot that is likely to be closest to a nearby building. In addition, the spot includes all of spots where an object that can be a noise generation source exists or spots where an action that can be a noise generation source is performed, such as an outdoor unit, BGM, and a spot where a cargo handling work is performed, in addition to a car. The "spot where a sound level is desired to be checked" is a spot where sound generated from a noise generation source is received at a real position corresponding to a predetermined map. For example, the spot is a building in a surrounding area of a large-scale retail store, and the building is a medical care facility, a social welfare facility, a residence, or the like. That is, all of buildings in a surrounding area in which the influence of noise should be considered are targeted.

The "estimation line" corresponds to a position where sound generated from a sound source in the real world is received. The estimation line is a line indicating a degree of attenuation of a sound level corresponding to a predetermined distance from the reference point or the reference line on a predetermined scale map. For example, on a predetermined scale map, a spot where sound is received with the sound level of a sound source located at the reference point or the reference line attenuating by 5 dB is indicated. In addition, the estimation line is a line indicating that, when a spot where a sound source is located and the reference point or the reference line are superimposed on each other on a predetermined scale map, the sound level of the sound source becomes a predetermined sound level (also referred to as received or attenuated) at a real spot corresponding to a position on the predetermined scale map in contact with the estimation line. For example, on a predetermined scale map, a spot where a sound source of 80 dB located at a spot matching the reference point or the reference line becomes 45 dB is indicated.

In addition, the estimation line is a line indicating that, when a spot where a sound level is desired to be checked and the reference point or the reference line are brought into contact with each other on a predetermined scale map, sound from a sound source with a predetermined sound level is received at a certain sound level or more at a real position corresponding to a spot on the predetermined scale map overlapping a line segment between the reference point or the reference line and the estimation line, or a range including the reference point or the reference line with the estimation line as a boundary. In addition, the estimation line is a line indicating that, when a spot where a sound level is desired to be checked and the reference point or the reference line are brought into contact with each other, sound from a sound source with a predetermined sound level is received at the certain sound level or less at a real position corresponding to a spot on the predetermined scale map overlapping a portion extending outside of the sound level estimating tool from the estimation line in a straight line including the reference point or the reference line and the estimation line, or a range not including the reference point or the reference line with the estimation line as a boundary. Note that all of buildings in a surrounding area in which the influence of noise should be considered are targeted as the spot where a sound level is desired to be checked as described above. Note that the estimation line can also be interpreted as including a plurality of estimation points.

Hereinafter, more specific configuration examples will be described with reference to the drawings. Note that overlapping description may be omitted.

[Configuration Example 1 of Sound Level Estimating Tool]

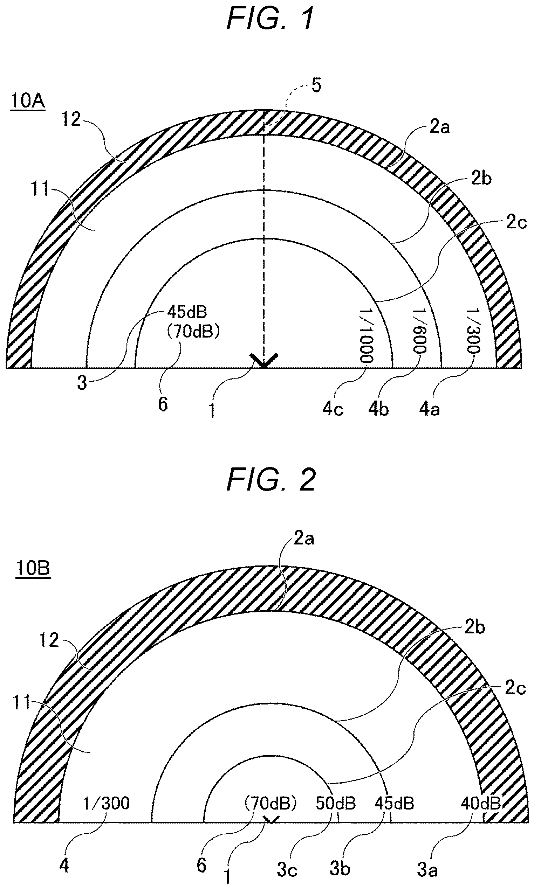

Figs. 1 to 5 are schematic views illustrating examples of a sound level estimating tool 10 according to the embodiment of the present invention. A sound level estimating tool 10A illustrated in Fig. 1 can be used for each of maps with a plurality of scales. It is possible to grasp a spot where sound is received at a predetermined sound level (estimated sound level 3) for a sound source with a predetermined sound level by using the sound level estimating tool 10A. For example, when the sound level of the sound source is 70 dB, the sound level estimating tool 10A is used to grasp a spot where sound is received at 45 dB on maps with scales of 1/300, 1/600, and 1/1000.

As illustrated in the drawing, the sound level estimating tool 10A includes a reference point 1 and an estimation line 2. Although the estimation line 2 is provided to grasp a position where sound is received at a predetermined sound level, an estimation point can be used instead of the estimation line to grasp a position where sound is received at a predetermined sound level. The sound level estimating tool 10A includes two or more estimation lines 2 (an estimation line 2a, an estimation line 2b, and an estimation line 2c). In addition, an estimated sound level 3 of the sound source on the estimation line, map scales 4a to 4c, an auxiliary line 5, a sound level 6 of the sound source at the reference point, and the like are preferably described in the sound level estimating tool 10A.

The reference point 1 is the center of a circle having the arc-shaped estimation lines 2a to 2c. The shape of the reference point 1 is preferably a shape that allows easy grasping of a spot to be superimposed on the reference point 1, such a circle, an inverted triangle, and an arrow in addition to a V shape as illustrated in Fig. 1. The auxiliary line 5 is a straight line that intersects the reference point 1. The auxiliary line 5 allows the position of the reference point 1 to be grasped more easily. The estimated sound level 3 is a sound level at which the sound level 6 of the sound source at a real position corresponding to the position of the reference point 1 on a predetermined scale map is estimated at a real position corresponding to a position on the estimation lines 2a to 2c. Around the estimation lines 2a to 2c, the corresponding map scales 4a to 4c are described. The map scales 4a to 4c may be described on the estimation lines 2a to 2c.

In the case of the sound level estimating tool 10A, the estimation line 2a corresponds to the 1/300 scale map described in the map scale 4a. That is, when the reference point 1 is superimposed on a spot where the sound source of 70 dB is assumed to be located on the 1/300 scale map, it can be estimated that sound is received at a sound level of 45 dB at a spot on the map overlapping the estimation line 2a. In addition, similarly, the estimation line 2b corresponds to the 1/600 scale map described in the map scale 4b, and the estimation line 2c corresponds to the 1/1000 scale map described in the map scale 4c. That is, when the reference point 1 is superimposed on the spot where the sound source of 70 dB is assumed to be located, it can be estimated that sound is received at a sound level of 45 dB at a spot on the map overlapping the estimation line 2b on the 1/600 scale map and at a spot on the map overlapping the estimation line 2c on the 1/1000 scale map.

In addition, the sound level estimating tool 10 is preferably formed of a transparent or translucent material. As a result, when the reference point 1 is superimposed on a sound source located at a predetermined spot on a map, a spot on the map that the estimation line 2 overlaps can be easily checked. Furthermore, it is possible to easily check a range in which the sound level of a predetermined sound source is received at a predetermined sound level or more, or a range in which the sound level is received at the predetermined sound level or less, with the estimation line 2 as a boundary. For example, with the estimation line 2a as a boundary, an area including the reference point 1 is defined as an area 11, and an outer portion is defined as an area 12. In Fig. 1, a hatched portion is the area 12. In the case of the sound level estimating tool 10A, when the reference point 1 is superimposed on the spot where the sound source of 70 dB is assumed to be located on the 1/300 scale map, it can be easily checked that sound is received at a sound level of 45 dB or more at a spot overlapping the area 11, and that sound is received at a sound level of 45 dB or less at a spot overlapping the area 12. In addition, when the reference point 1 is superimposed on a spot where a sound level is desired to be checked on the 1/300 scale map, it can be easily checked that sound is received at a sound level of 45 dB or more at the reference point 1 with the sound source of 70 dB being located in the area 11, and that sound is received at a sound level of 45 dB or less at the reference point 1 with the sound source of 70 dB being located in the area 12.

In addition, the sound level estimating tool 10 preferably has a semicircular shape or a fan shape. This makes the sound level estimating tool compact and easy to carry in a case where it is necessary to carry a plurality of sound level estimating tools. In addition, the sound level estimating tool 10 may have a circular shape or a quadrangular shape. One sound level estimating tool may include a plurality of reference points 1 and a plurality of estimation lines 2 corresponding thereto.

Since the estimated sound level 3 and the sound level 6 of the sound source are fixed, the sound level estimating tool 10A is preferably provided in combination with a plurality of sound level estimating tools having the same configuration as the sound level estimating tool 10A, used for different estimated sound levels and different sound levels of the sound source.

A method for calculating an interval between the reference point 1 and the estimation line 2 of the sound level estimating tool 10 will be described. In general, the loudness of sound attenuates with increasing distance. In a case where the sound source is a point and in a case where there is a certain degree of distance from the sound source, the relationship of an attenuation amount A of a sound level between a sound level at a distance r0 and a sound level at a distance r1 from the sound source is obtained by the following equation. Based on this, the interval between the reference point 1 and the estimation line 2 of the sound level estimating tool 10 is obtained, and a positional relationship corresponding to the distance of a predetermined scale map is determined.

$$\text{Attenuation amount } A \text{ (dB)} = 20 \times \text{Log}_{10} \, (r1/r0)$$

[Configuration Example 2 of Sound Level Estimating Tool]

Next, a sound level estimating tool 10B will be described. The sound level estimating tool 10B illustrated in Fig. 2 is used for a predetermined scale map (map scale 4). It is possible to grasp a spot where sound with a predetermined sound level generated from a sound source (sound level 6 of the sound source) becomes sound with an attenuated predetermined sound level (estimated sound level 3) by using the sound level estimating tool 10B. In addition, a plurality of estimation lines 2 are provided in the sound level estimating tool 10B, which makes it possible to grasp spots where the sound becomes sound with different predetermined sound levels (estimated sound levels 3a to 3c). For example, when the sound level of the sound source is 70 dB, the sound level estimating tool 10B is used to grasp spots where sound is received at 40 dB, 45 dB, or 50 dB on a map with a scale of 1/300.

As illustrated in the drawing, the sound level estimating tool 10B includes a reference point 1 and estimation lines 2a to 2c. In addition, estimated sound levels 3a to 3c of the sound source on the estimation lines, a map scale 4, a sound level 6 of the sound source at the reference point, and the like are preferably described in the sound level estimating tool 10B. As a result, a user can use the sound level estimating tool 10B without mistakenly using a sound level estimating tool having the same configuration as the sound level estimating tool 10B, used for a different map scale or a sound source with a different predetermined sound level.

As described above, the reference point 1 is the center of a circle having the arc-shaped estimation lines 2a to 2c. The estimated sound levels 3a to 3c are sound levels at which the sound level 6 of the sound source at a real position corresponding to the position of the reference point 1 on a predetermined scale map is estimated at real positions corresponding to positions on the estimation lines 2a to 2c, respectively. The estimated sound levels 3a to 3c are described on the estimation lines 2a to 2c, but may be described around the estimation lines 2a to 2c.

In the case of the sound level estimating tool 10B, the estimation lines 2a to 2c correspond to the 1/300 scale map described in the map scale 4. That is, when the reference point 1 is superimposed on a spot where the sound source of 70 dB is assumed to be located on the 1/300 scale map, it can be estimated that sound is received at a sound level of 40 dB at a spot on the map overlapping the estimation line 2a. In addition, when the reference point 1 is superimposed on the spot where the sound source of 70 dB is assumed to be located on the 1/300 scale map, it can be estimated that sound is received at a sound level of 45 dB at a spot on the map overlapping the estimation line 2b and at a sound level of 50 dB at a spot on the map overlapping the estimation line 2c.

Moreover, it is possible to easily check a range in which the sound level of a predetermined sound source is received at a predetermined sound level or more, or a range in which the sound level is received at the predetermined sound level or less, with the estimation line 2 as a boundary. For example, with the estimation line 2a as a boundary, an area including the reference point 1 is defined as an area 11, and an outer portion is defined as an area 12 (hatched portion). In the case of the sound level estimating tool 10B, when the reference point 1 is superimposed on the spot where the sound source of 70 dB is assumed to be located on the 1/300 scale map, it can be easily checked that sound is received at a sound level of 40 dB or more at a spot overlapping the area 11, and that sound is received at a sound level of 40 dB or less at a spot overlapping the area 12. In addition, when the reference point 1 is superimposed on a spot where a sound level is desired to be checked on the 1/300 scale map, it can be easily checked that sound is received at a sound level of 40 dB or more at the reference point 1 with the sound source of 70 dB being located in the area 11, and that sound is received at a sound level of 40 dB or less at the reference point 1 with the sound source of 70 dB being located in the area 12.

Since the map scale 4 and the sound level of the sound source are fixed, the sound level estimating tool 10B is preferably provided in combination with a plurality of sound level estimating tools having the same configuration as the sound level estimating tool 10B, used for different map scales and different sound levels of the sound source.

[Configuration Example 3 of Sound Level Estimating Tool]

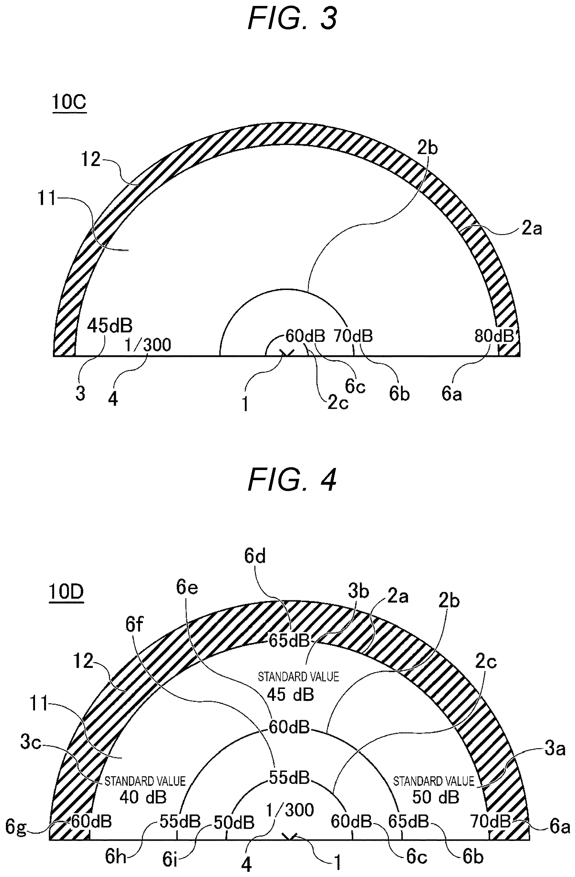

Next, a sound level estimating tool 10C will be described. The sound level estimating tool 10C illustrated in Fig. 3 is used for a predetermined scale map (map scale 4). It is possible to grasp a spot where sound is received at a predetermined sound level (estimated sound level 3) for a sound source with a plurality of predetermined sound levels (sound levels 6a to 6c of the sound source) by using the sound level estimating tool 10C. For example, when the sound levels of the sound source are 60 dB, 70 dB, and 80 dB, the sound level estimating tool 10C is used to grasp a spot where sound is received at 45 dB on a map with a scale of 1/300.

As illustrated in the drawing, the sound level estimating tool 10C includes a reference point 1 and estimation lines 2a to 2c. In addition, an estimated sound level 3 on the estimation line, a map scale 4, sound levels 6a to 6c of the sound source, and the like are preferably described in the sound level estimating tool 10C.

As described above, the reference point 1 is the center of a circle having the arc-shaped estimation lines 2a to 2c. The estimated sound level 3 is a sound level at which the sound levels 6a to 6c of the sound source at a real position corresponding to the position of the reference point 1 on a predetermined scale map are estimated at real positions corresponding to positions on the corresponding estimation lines 2a to 2c. The sound levels 6a to 6c of the sound source are described on the estimation lines 2a to 2c, but may be described around the estimation lines 2a to 2c.

In the case of the sound level estimating tool 10C, the estimation lines 2a to 2c correspond to the 1/300 scale map described in the map scale 4. That is, when the reference point 1 is superimposed on a spot where the sound source of 80 dB is assumed to be located on the 1/300 scale map, it can be estimated that sound is received at a sound level of 45 dB at a spot on the map overlapping the estimation line 2a. In addition, when the reference point 1 is superimposed on a spot where the sound source of 70 dB is assumed to be located on the 1/300 scale map, it can be estimated that sound is received at a sound level of 45 dB at a spot on the map overlapping the estimation line 2b. When the reference point 1 is superimposed on a spot where the sound source of 60 dB is assumed to be located on the 1/300 scale map, it can be estimated that sound is received at a sound level of 45 dB at a spot on the map overlapping the estimation line 2c.

Moreover, it is possible to easily check a range in which the sound level of a predetermined sound source is received at a predetermined sound level or more, or a range in which the sound level is received at the predetermined sound level or less, with the estimation line 2 as a boundary. For example, with the estimation line 2a as a boundary, an area including the reference point 1 is defined as an area 11, and an outer portion is defined as an area 12 (hatched portion). In the case of the sound level estimating tool 10C, when the reference point 1 is superimposed on the spot where the sound source of 80 dB is assumed to be located on the 1/300 scale map, it can be easily checked that sound is received at a sound level of 45 dB or more at a spot overlapping the area 11, and that sound is received at a sound level of 45 dB or less at a spot overlapping the area 12. In addition, when the reference point 1 is superimposed on a spot where a sound level is desired to be checked on the 1/300 scale map, it can be easily checked that sound is received at a sound level of 45 dB or more at the reference point 1 with the sound source of 80 dB being located in the area 11, and that sound is received at a sound level of 45 dB or less at the reference point 1 with the sound source of 80 dB being located in the area 12.

Since the estimated sound level 3 and the map scale 4 are fixed, the sound level estimating tool 10C is preferably provided in combination with a plurality of sound level estimating tools having the same configuration as the sound level estimating tool 10C, used for different estimated sound levels and different map scales.

[Configuration Example 4 of Sound Level Estimating Tool]

Next, a sound level estimating tool 10D will be described. The sound level estimating tool 10D illustrated in Fig. 4 is used for a predetermined scale map (map scale 4). It is possible to grasp spots where sound is received at predetermined sound levels (estimated sound levels 3a to 3c) for a sound source with a plurality of predetermined sound levels (sound levels 6a to 6i of the sound source) by the sound level estimating tool 10D. For example, when the sound levels of the sound source are 60 dB, 65 dB, and 70 dB, the sound level estimating tool 10D is used to grasp a spot where sound is received at 50 dB on a map with a scale of 1/300. In addition, on the 1/300 scale map, the sound level estimating tool 10D is used to grasp a spot where sound is received at 45 dB when the sound levels of the sound source are 55 dB, 60 dB, and 65 dB, and to grasp a spot where sound is received at 40 dB when the sound levels of the sound source are 50 dB, 55 dB, and 60 dB.

As illustrated in the drawing, the sound level estimating tool 10D includes a reference point 1 and estimation lines 2a to 2c. In addition, estimated sound levels 3a to 3c on the estimation lines, a map scale 4, sound levels 6a to 6i of the sound source, and the like are preferably described in the sound level estimating tool 10D.

As described above, the reference point 1 is the center of a circle having the arc-shaped estimation lines 2a to 2c. The estimated sound level 3a is a sound level at which the sound levels 6a to 6c of the sound source at a real position corresponding to the position of the reference point 1 on a predetermined scale map are estimated at real positions corresponding to positions on the corresponding estimation lines 2a to 2c. The estimated sound level 3b is a sound level at which the sound levels 6d to 6f of the sound source at a real position corresponding to the position of the reference point 1 on a predetermined scale map are estimated at real positions corresponding to positions on the corresponding estimation lines 2a to 2c. The estimated sound level 3c is a sound level at which the sound levels 6g to 6i of the sound source at a real position corresponding to the position of the reference point 1 on a predetermined scale map are estimated at real positions corresponding to positions on the corresponding estimation lines 2a to 2c. The sound levels 6a to 6i of the sound source are described on the estimation lines 2a to 2c, but may be described around the estimation lines 2a to 2c. In addition, it is preferable that the sound levels 6a to 6i of the sound source are described so that the corresponding estimated sound levels 3a to 3c can be recognized. For example, in the case of corresponding to the same estimated sound level 3, the sound levels 6 of the sound source may be shown on the same radius as the estimated sound level 3 in the sound level estimating tool 10D.

In the case of the sound level estimating tool 10D, the estimation lines 2a to 2c correspond to the 1/300 scale map described in the map scale 4. That is, when the reference point 1 is superimposed on a spot where the sound source of 70 dB is assumed to be located on the 1/300 scale map, it can be estimated that sound is received at a sound level of 50 dB at a spot on the map overlapping the estimation line 2a. In addition, when the reference point 1 is superimposed on a spot where the sound source of 60 dB is assumed to be located on the 1/300 scale map, it can be estimated that sound is received at 40 dB at a spot on the map overlapping the estimation line 2a, that sound is received at 45 dB at a spot on the map overlapping the estimation line 2b, and that sound is received at a sound level of 50 dB at a spot on the map overlapping the estimation line 2c.

Moreover, it is possible to easily check a range in which the sound level of a predetermined sound source is received at a predetermined sound level or more, or a range in which the sound level is received at the predetermined sound level or less, with the estimation line 2 as a boundary. For example, with the estimation line 2a as a boundary, an area including the reference point 1 is defined as an area 11, and an outer portion is defined as an area 12 (hatched portion). In the case of the sound level estimating tool 10D, when the reference point 1 is superimposed on the spot where the sound source of 60 dB is assumed to be located on the 1/300 scale map, it can be easily checked that sound is received at a sound level of 40 dB or more at a spot overlapping the area 11, and that sound is received at a sound level of 40 dB or less at a spot overlapping the area 12. In addition, when the reference point 1 is superimposed on a spot where a sound level is desired to be checked on the 1/300 scale map, it can be easily checked that sound is received at a sound level of 40 dB or more at the reference point 1 with the sound source of 60 dB being located in the area 11, and that sound is received at a sound level of 40 dB or less at the reference point 1 with the sound source of 60 dB being located in the area 12.

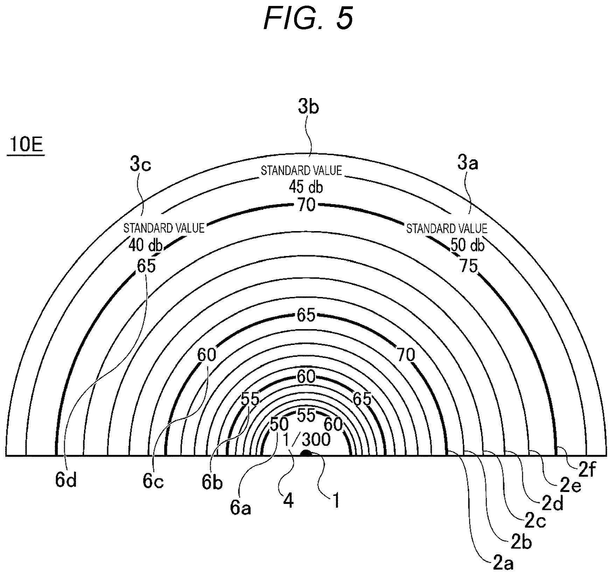

Next, a sound level estimating tool 10E will be described. The sound level estimating tool 10E illustrated in Fig. 5 is an application example of the sound level estimating tool 10D. The sound level estimating tool 10E is used for a predetermined scale map (map scale 4). It is possible to grasp spots where sound is received at predetermined sound levels (estimated sound levels 3a to 3c) for a sound source with a plurality of predetermined sound levels (sound levels 6a to 6d of the sound source) by the sound level estimating tool 10E.

As illustrated in the drawing, the sound level estimating tool 10E includes a reference point 1 and a plurality of estimation lines 2. In addition, estimated sound levels 3a to 3c on the estimation lines, a map scale 4, sound levels 6a to 6d of the sound source, and the like are preferably described in the sound level estimating tool 10E.

The estimation lines 2 indicate spots where the sound level attenuates by a predetermined sound level for the sound source at a real position corresponding to the position of the reference point 1 on a predetermined scale map. For example, estimation lines 2a to 2f indicate spots where the sound level of the sound source assumed to be located at the reference point 1 attenuates by 1 dB. The sound level 6 of the sound source is preferably described on or around the estimation line 2. Specifically, the sound level 6c or 6d of the sound source is preferably described on or around the estimation line 2 where the sound level attenuates by 5 dB, such as the estimation line 2a or the estimation line 2f.

In the case of the sound level estimating tool 10E, it is possible to finely grasp a position where sound from the sound source with a predetermined sound level assumed to be located at the reference point 1 is received, and the received sound level on the 1/300 scale map. For example, in a case where the sound source of 65 dB is located at the reference point 1 on the 1/300 scale map, it can be estimated that sound is received at 45 dB on the estimation line 2a, 44 dB on the estimation line 2b, 43 dB on the estimation line 2c, 42 dB on the estimation line 2d, 41 dB on the estimation line 2e, and 40 dB on the estimation line 2f. As a result, the estimated sound level 3 not described in the sound level estimating tool 10E can also be grasped. In addition, it is possible to finely grasp a position where sound from the sound source with a sound level assumed to be located at the reference point 1 is received at a predetermined sound level, and the sound level of the sound source on the 1/300 scale map. For example, it can be estimated that a spot where the sound level of the sound source is received at 40 dB is a spot corresponding to the estimation line 2a when the sound source at the reference point 1 is 60 dB, the estimation line 2b when the sound source at the reference point 1 is 61 dB, the estimation line 2c when the sound source at the reference point 1 is 62 dB, the estimation line 2d when the sound source at the reference point 1 is 63 dB, the estimation line 2e when the sound source at the reference point 1 is 64 dB, and the estimation line 2f when the sound source at the reference point 1 is 65 dB. As a result, the estimated sound level can also be grasped for the sound level 6 of the sound source not described in the sound level estimating tool 10E. In addition, in a case where the number of estimation lines 2 is large, the color of the estimation line or the thickness of the estimation line may be changed for every predetermined number of attenuated sound levels. For example, the estimation lines 2a and 2f can be red, and the estimation lines 2b to 2e can be black. As a result, the visibility of the sound level estimating tool is improved, and the numerical values can be easily grasped.

Since the map scale 4 is fixed, the sound level estimating tools 10D and 10E are preferably provided in combination with a plurality of sound level estimating tools having the same configuration as the sound level estimating tool 10D or 10E, used for different map scales.

[Configuration Example 5 of Sound Level Estimating Tool]

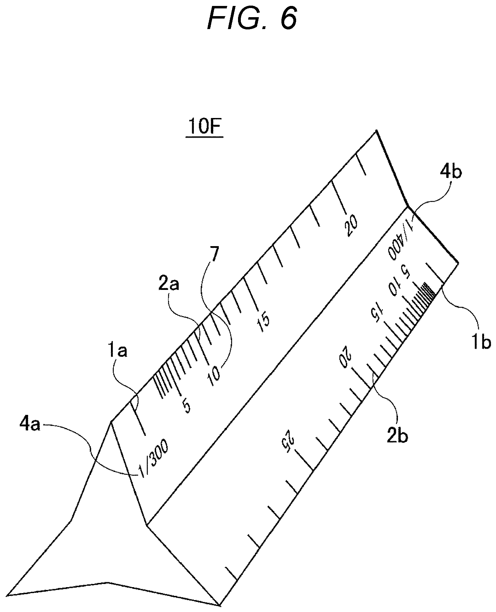

Next, a sound level estimating tool 10F will be described. The sound level estimating tool 10F illustrated in Fig. 6 is used for maps with a plurality of predetermined scales (map scales 4a and 4b). It is possible to grasp a spot (estimation line 2a or 2b) where the sound level of a sound source at a real position corresponding to the position of a reference point 1 attenuates by a predetermined sound level by using the sound level estimating tool 10F. The sound level estimating tool 10F is a ruler type sound level estimating tool. In addition, the sound level estimating tool 10F has one or more rectangular faces.

As illustrated in the drawing, the sound level estimating tool 10F includes reference lines 1 (reference lines 1a and 1b) and estimation lines 2 (estimation lines 2a and 2b). A plurality of the estimation lines 2 are preferably described as graduations, which indicate spots on a predetermined map where a predetermined sound level assumed to be located at the reference point 1 attenuates by a predetermined sound level. For example, the estimation lines 2 can indicate spots on a predetermined map where a predetermined sound level assumed to be located at the reference point 1 attenuates by 1 dB. In addition, a map scale 4, an attenuated sound level 7, and the like are preferably described in the sound level estimating tool 10F. In addition, the sound level estimating tool 10F has a plurality of faces. Moreover, the shape of the plurality of faces is rectangular. On each face, the reference point 1 (reference point 1a, 1b, or the like) and the estimation lines 2 (estimation line 2a, 2b, or the like) corresponding to a different map scale 4 (map scale 4a, 4b, or the like) are described. The shape of the sound level estimating tool 10F is a shape similar to a so-called triangular scale including various scale graduations according to various applications.

On one face of the sound level estimating tool 10F, the reference line 1a and the estimation line 2a corresponding to the map scale 4a are described. In the estimation line 2a, it is preferable that the attenuated sound level 7 is described for every predetermined number of estimation lines 2 in order to clearly indicate to a user that the predetermined sound level is attenuated. The attenuated sound level 7 is a sound level at which the sound level of the sound source at a real position corresponding to the position of the reference point 1 on a predetermined scale map is attenuated at a real position corresponding to a position on the estimation line 2. For example, when the reference line 1a is laid along a spot where the sound source with a predetermined sound level is assumed to be located on a 1/300 scale map, it can be estimated that the sound level attenuates by 10 dB from the predetermined sound level at a spot on the map matching the estimation line 2a. As a result, the estimated sound level at a predetermined spot can be checked for the sound level of any sound source.

In addition, the shape of the sound level estimating tool 10F may be a quadrangular prism. In this case, it is preferable that the reference point and the estimation line corresponding to the scale of a predetermined map are described at each longitudinal edge of a rectangular face as each side face. That is, it is possible to grasp a spot where the sound level of the sound source at a real position corresponding to the position of the reference point attenuates by a predetermined sound level, with respect to the scales of eight different maps. Furthermore, the shape of the sound level estimating tool 10F may be a quadrangular tube, so that the sound level estimating tool can be folded and carried. In addition, the sound level estimating tool 10F may be a rectangular ruler type sound level estimating tool, and may have a plurality of reference points and a plurality of estimation lines corresponding to different map scales on one face. In this case, each longitudinal edge of the rectangular face has the reference point and the estimation line corresponding to the scale of a predetermined map. Furthermore, a rectangular space may be provided inside the rectangular face, and the reference point and the estimation line corresponding to the scale of a predetermined map may be provided at each longitudinal edge of the rectangular space. At this time, a configuration is adopted in which the reference point and the estimation line corresponding to the scale of a predetermined map are provided on each of a front surface and a back surface of the rectangular shape, which makes it possible to grasp a spot where the sound level of the sound source at a real position corresponding to the position of the reference point attenuates by a predetermined sound level, with respect to the scales of eight different maps.

Note that the sound level estimating tools 10A to 10E have a fan shape, but may have a ruler shape or a triangular scale shape having a plurality of faces, similarly to the sound level estimating tool 10F, with the roles of the reference point and the estimation line being unchanged. It is preferable that each of the plurality of faces corresponds to any one of a different predetermined estimated sound level, a different scale of a predetermined map, or a different sound level of a predetermined sound source.

[Configuration Example 6 of Sound Level Estimating Tool]

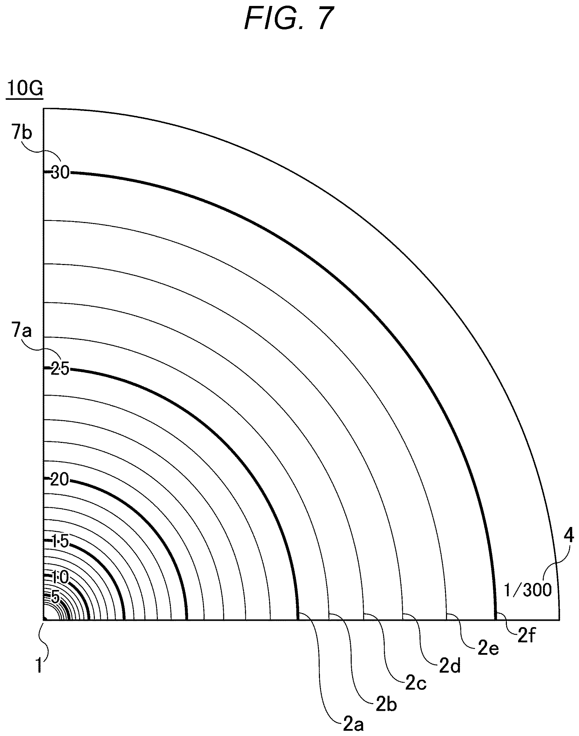

Next, a sound level estimating tool 10G will be described. The sound level estimating tool 10G illustrated in Fig. 7 is used for a predetermined scale map (map scale 4). It is possible to grasp spots (estimation lines 2a to 2f) where the sound level of a sound source at a real position corresponding to the position of a reference point 1 attenuates by a predetermined sound level (attenuated sound level 7a or 7b) by using the sound level estimating tool 10G. That is, the sound level estimating tool 10G is obtained by forming, into a fan shape, one face corresponding to the scale of a predetermined map of the sound level estimating tool 10F having a ruler shape, with the roles of the reference line and the estimation line being unchanged. Similarly to the sound level estimating tools 10A to 10E, the shape of the sound level estimating tool 10G may be a semicircular shape, or may be any fan shape that has a central angle of 360° or less. The shape is preferably a fan shape having a central angle of 90°.

As illustrated in the drawing, the sound level estimating tool 10G includes a reference point 1 and estimation lines 2a to 2f. In addition, a map scale 4, attenuated sound levels 7a to 7b, and the like are preferably described in the sound level estimating tool 10G. The reference point 1 is the center of a circle having the arc-shaped estimation lines 2a to 2f. The estimation lines 2 indicate spots where the sound level of the sound source at a real position corresponding to the position of the reference point 1 on a predetermined scale map attenuates by a predetermined sound level. For example, the estimation lines 2a to 2f indicate spots where the sound level of the sound source assumed to be located at the reference point 1 attenuates by 1 dB.

The attenuated sound level 7 is a sound level at which a predetermined sound level at a real position corresponding to the position of the reference point 1 on a predetermined scale map is attenuated at a real position corresponding to a position on the estimation line 2. In addition, the attenuated sound level 7 is preferably described on or around the estimation line 2 corresponding to a spot where the predetermined sound level is attenuated. Specifically, the attenuated sound level 7a or 7b can be described on or around the estimation line 2 where the sound level attenuates by 5 dB, such as the estimation line 2a or the estimation line 2f. In addition, in a case where the number of estimation lines 2 is large, the color of the estimation line or the thickness of the estimation line may be changed for every predetermined number of attenuated sound levels. For example, the estimation lines 2a and 2f can be red, and the estimation lines 2b to 2e can be black. As a result, the visibility of the sound level estimating tool is improved, and the numerical values can be easily grasped.

In the case of the sound level estimating tool 10G, the estimation lines 2a to 2f correspond to a 1/300 scale map described in the map scale 4. That is, when the reference line 1 is superimposed on a spot where the sound source with a predetermined sound level is assumed to be located on the 1/300 scale map, it can be estimated that the sound level attenuates by 25 dB from the predetermined sound level at a spot on the map matching the estimation line 2a. In addition, it can be estimated that the sound level attenuates from the predetermined sound level by 26 dB on the estimation line 2b, 27 dB on the estimation line 2c, 28 dB on the estimation line 2d, 29 dB on the estimation line 2e, and 30 dB on the estimation line 2f. As a result, the estimated sound level at a predetermined spot on a predetermined scale map can be checked for the sound level of any sound source. For example, when the reference point 1 is superimposed on a spot where a sound source of 70 dB is assumed to be located, it can be estimated that sound is received at a sound level of 45 dB at a spot on the map overlapping the estimation line 2a, and sound levels at which sound is received at respective spots can be estimated similarly for the estimation lines 2b to 2f.

Since the map scale 4 is fixed, the sound level estimating tool 10G is preferably provided in combination with a plurality of sound level estimating tools having the same configuration as the sound level estimating tool 10G, used for different map scales.

(Usage examples)

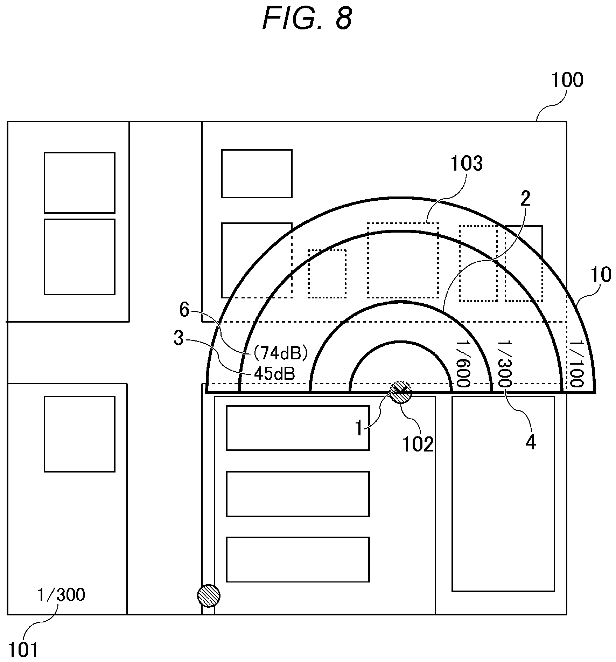

Next, a usage example of the sound level estimating tool 10 in the embodiment of the present invention will be described. The usage described below is an example. Fig. 8 is a drawing illustrating one usage example of the sound level estimating tool according to the embodiment of the present invention. Here, an example using the sound level estimating tool 10A will be described.

First, a user designs a facility and prepares a map including surroundings. On a map 100, it is preferable that a map scale 101 is described, and a spot 102 as a noise generation source, a building 103, and the like are also described. In Fig. 8, a case is assumed in which a design related to a parking lot is checked, for example. Since visitor vehicles go in and out at the spot 102, it is necessary to check whether a sound level received at the building 103 or the like located near the spot 102 satisfies predetermined standards. Since the visitor vehicles going into and out of the parking lot is typically 74 dB, the sound level of noise generated at the spot 102 can be set to 74 dB. In addition, since the building 103 is a general residence, it is necessary to confirm that sound is received at 45 dB or less at the spot of the building 103 on the basis of the standards.

Next, the sound level estimating tool 10 to be used is selected. In selecting the sound level estimating tool 10, it is necessary to select the sound level estimating tool 10 in consideration of information on the map scale to be used, the sound level of the sound source to be checked in designing the facility, and the estimated sound level at the spot of the building to be checked. In the case of Fig. 8, the map scale 101 is 1/300. In addition, the sound level of the sound source to be considered at the spot 102 is 74 dB. Moreover, it is necessary to confirm that sound is received at 45 dB or less at the spot of the building 103. From these factors, the sound level estimating tool 10 corresponding to the 1/300 scale map, the sound level of the sound source being 74 dB, and the estimated sound level being 45 dB is selected.

When the sound level estimating tool 10 that satisfies the above conditions is selected, the reference point 1 is superimposed on the spot 102 on the map 100. Then, the estimation line 2 corresponding to 1/300 is checked. As a result, it is found that the building 103 does not overlap an area of the estimation line 2 including the reference point 1. That is, it can be easily confirmed that the sound level of the sound source generated at the spot 102 is received at 45 dB or less at the spot of the building 103. In a case where the building 103 overlaps a range including the reference point 1 surrounded by the estimation line 2, the sound level at the building 103 is 45 dB or more. Thus, it can be understood that it is necessary to consider a change in installation location or soundproof measures. By using the sound level estimating tool 10, the user can easily check whether the sound level is greater or smaller than the target estimated sound level at a predetermined spot without performing complicated calculations.

In the above description, the reference point 1 is superimposed on the spot 102 to check the estimated sound level. However, other spots present on the map 100 can be similarly checked. In addition, it is also possible to specify a range in which the sound level of a predetermined sound source exceeds a predetermined standard based on the spot of the building 103, that is, a range in which the sound source cannot be installed. For example, when the reference point 1 of the sound level estimating tool 10 is superimposed on the spot of the building 103, it can be easily estimated that, in an area of the map 100 overlapping the range including the reference point 1 surrounded by the estimation line 2, sound from the sound source of 74 dB is received at a sound level of 45 dB or more. Therefore, in a case where the sound source is located in the range, it can be checked at a glance that it is necessary to consider a change in installation location or soundproof measures.

According to the present invention, by superimposing the sound level estimating tool on a predetermined scale map, a sound level at a spot where sound generated from a sound source in the real world is received can be checked at a glance, which makes it possible to reduce the time and labor of a worker who checks the estimated sound level of noise. In addition, according to the present invention, it is possible to check a sound level at a sound reception spot of a sound source located on each of a plurality of maps with different scales by using one sound level estimating tool, and it is possible to use one sound level estimating tool for maps with a plurality of scales. In addition, according to the present invention, it is possible to easily estimate the sound levels of a sound source at a plurality of sound reception positions for a sound source corresponding to a position on a predetermined scale map, and it is possible to grasp a plurality of estimated sound levels of the sound source by one sound level estimating tool. In addition, according to the present invention, it is possible to easily estimate a position where sound is received at a predetermined sound level with respect to a plurality of sound levels of a sound source corresponding to a position on a predetermined scale map, and it is possible to check an estimated sound level with respect to the plurality of sound levels of the sound source by one sound level estimating tool.

In addition, according to the present invention, it is possible to easily check that sound generated from a sound source at a real position corresponding to a position on a predetermined scale map in contact with at least a part of the reference point or the reference line attenuates by a predetermined sound level at a real position corresponding to a position on the map in contact with at least a part of the estimation point or the estimation line. Therefore, an estimated sound level at a sound reception spot can be checked for the sound level of a sound source not described in the sound level estimating tool. In addition, according to the present invention, it is possible to estimate attenuation by a predetermined sound level at a real position corresponding to a position on maps with a plurality of scales in contact with at least a part of the estimation point or the estimation line, and it is not necessary to carry a plurality of tools. In addition, according to the present invention, it is possible to visually understand a range in which the sound level of a sound source is received at a predetermined sound level on a predetermined scale map.

Reference Signs List

1: reference point or the reference line, 2, 2a~2f: estimation line, 3, 3a~3c: estimated sound level 4, 4a~4c: map scale, 5: auxiliary line, 6, 6a~6i: sound level of sound source, 7, 7a, 7b: attenuated sound level, 10, 10A~10F: sound level estimating tool, 11, 12: area, 100: map, 101: map scale, 102: spot, 103: building

**Claims**

1. A sound level estimating tool used in contact with a predetermined scale map, the sound level estimating tool comprising:

   a reference point or a reference line corresponding to a position of a sound source in a real world; and an estimation point or an estimation line corresponding to a position in the real world where sound generated from the sound source is received,
   the sound level estimating tool indicating that, when at least a part of the reference point or the reference line and at least a part of the estimation point or the estimation line are brought into contact with the map, sound generated from the sound source at a real position corresponding to a position on the map in contact with at least a part of the reference point or the reference line is received at a predetermined sound level at a real position corresponding to a position on the map in contact with at least a part of the estimation point or the estimation line.

2. The sound level estimating tool according to claim 1, the sound level estimating tool being used in contact with each of maps with different scales, the sound level estimating tool further comprising

   two or more of the estimation points or the estimation lines,
   each of the estimation points or the estimation lines corresponding to a respective one of the maps with different scales,
   the sound level estimating tool indicating that, when at least a part of the reference point or the reference line and at least a part of the estimation point or the estimation line corresponding to one scale map among the maps with different scales are brought into contact with the one scale map, sound generated from the sound source at a real position corresponding to a position on the one scale map in contact with at least a part of the reference point or the reference line is received at a predetermined sound level at a real position corresponding to a position on the one scale map in contact with at least a part of the estimation point or the estimation line corresponding to the one scale map.

3. The sound level estimating tool according to claim 1, further comprising

two or more of the estimation points or the estimation lines,

the sound level estimating tool indicating that, when at least a part of the reference point or the reference line and at least a part of the estimation points or the estimation lines are brought into contact with the map, sound generated from the sound source at a real position corresponding to a position on the map in contact with at least a part of the reference point or the reference line is received at a different sound level at a real position corresponding to a position on the map in contact with at least a part of each of the estimation points or the estimation lines.

4. The sound level estimating tool according to claim 1, further comprising

two or more of the estimation points or the estimation lines,

the sound level estimating tool indicating that, when at least a part of the reference point or the reference line and at least a part of the estimation points or the estimation lines are brought into contact with the map, sound generated from the sound source at a real position corresponding to a position on the map in contact with at least a part of the reference point or the reference line is received at a predetermined sound level at a real position corresponding to a position on the map in contact with at least a part of each of the estimation points or the estimation lines, each of the estimation points or the estimation lines corresponding to a different sound level generated from the sound source at the real position corresponding to the position on the map in contact with at least a part of the reference point or the reference line.

5. A sound level estimating tool used in contact with a predetermined scale map, the sound level estimating tool comprising:

a reference point or a reference line corresponding to a position of a sound source in a real world; and two or more estimation points or estimation lines corresponding to positions in the real world where sound generated from the sound source is received,

the sound level estimating tool indicating that, when at least a part of the reference point or the reference line and at least a part of the estimation points or the estimation lines are brought into contact with the map, sound generated from the sound source at a real position corresponding to a position on the map in contact with at least a part of the reference point or the reference line attenuates by a predetermined sound level at a real position corresponding to a position on the map in contact with at least a part of each of the estimation points or the estimation lines.

6. The sound level estimating tool according to any one of claims 1 and 3 to 5, wherein

the sound level estimating tool has a plurality of faces, and
on each of the plurality of faces, the reference point or the reference line and a plurality of the estimation points or the estimation lines corresponding to a predetermined map scale according to the face are described.

7. The sound level estimating tool according to any one of claims 1 to 5, wherein

the estimation line is a circle or an arc centered on the reference point, and
the sound level estimating tool has a semicircular shape or a fan shape.

8. A sound level estimating method using a sound level estimating tool including a reference point or a reference line corresponding to a position of a sound source in a real world, and an estimation point or an estimation line corresponding to a position in the real world where sound generated from the sound source is received, the sound level estimating method comprising:
bringing at least a part of the reference point or the reference line and at least a part of the estimation point or the estimation line into contact with a predetermined scale map, to estimate that sound generated from the sound source at a real position corresponding to a position on the map in contact with at least a part of the reference point or the reference line is received at a predetermined sound level at a real position corresponding to a position on the map in contact with at least a part of the estimation point or the estimation line.

9. A sound level estimating method using a sound level estimating tool including a reference point or a reference line corresponding to a position where sound generated from a sound source in a real world is received, and an estimation line corresponding to a position of the sound source in the real world, the sound level estimating method comprising:
bringing at least a part of the reference point or the reference line and at least a part of the estimation line into contact with a predetermined scale map, to estimate that sound generated from the sound source at a real position corresponding to a position on the map in contact with at least a part of a range including the reference point or the reference line surrounded by the estimation line is received at a predetermined sound level or more at a real position corresponding to a position on the map in contact with at least a part of the reference point.

## FIG. 1

## FIG. 2

## FIG. 3

10C

12
11
2b
2a

45dB   1/300   60dB 70dB   80dB

3   4   1   2c   6c   6b   6a
2b

## FIG. 4

10D

6d
6e
6f
3b   2a   2b
65dB
STANDARD VALUE
45 dB
2c

12
11
3c
60dB
55dB
STANDARD VALUE
40 dB
STANDARD VALUE
50 dB
3a

6g   60dB   55dB 50dB   1/300   60dB 65dB   70dB   6a
6h   6i   4   1   6c   6b

# FIG. 5

10E

3b

3c

3a

STANDARD VALUE
45 db
70

STANDARD VALUE
40 db
65

STANDARD VALUE
50 db
75

65

60

70

60

55

65

55 60

50 55 60

1/300

6d

6c

6b

6a

4

1

2f
2e
2d
2c
2b
2a

FIG. 6

FIG. 7

## FIG. 8

## INTERNATIONAL SEARCH REPORT

| International application No. |
|---|
| **PCT/JP2022/023541** |

**A. CLASSIFICATION OF SUBJECT MATTER**

*G01H 3/00*(2006.01)i; *G01B 21/00*(2006.01)i; *G01B 3/02*(2020.01)i
FI: G01H3/00 A; G01B21/00 Z; G01B3/02

According to International Patent Classification (IPC) or to both national classification and IPC

**B. FIELDS SEARCHED**

Minimum documentation searched (classification system followed by classification symbols)

G01H1/00-17/00; G01B21/00-21/32; G01B3/00-3/56

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | CN 108895940 A (FDB AUDIO MANUFACTURE CO., LTD.) 27 November 2018 (2018-11-27)<br>paragraphs [0027], [0044], fig. 1, 4-5 | 1-9 |
| A | JP 63-228034 A (KAJIMA CORP) 22 September 1988 (1988-09-22)<br>claims, specification, p. 2, upper left column, line 7 to p. 3, upper left column, line 13, fig. 1-4 | 1-9 |
| A | JP 2017-199260 A (NIPPON SHARYO SEIZO KK) 02 November 2017 (2017-11-02)<br>paragraph [0018] | 1-9 |
| A | JP 2018-165774 A (TOA CORP) 25 October 2018 (2018-10-25)<br>entire text, all drawings | 1-9 |
| A | JP 2016-20841 A (TOYO CONSTRUCTION) 04 February 2016 (2016-02-04)<br>entire text, all drawings | 1-9 |
| A | JP 2017-40128 A (SUMITOMO FORESTRY) 23 February 2017 (2017-02-23)<br>entire text, all drawings | 1-9 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **29 July 2022** | **09 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/023541**

**C.    DOCUMENTS CONSIDERED TO BE RELEVANT**

| Category* | Citation of document, with indication, where appropriate, of the relevant passages | Relevant to claim No. |
|---|---|---|
| A | JP 2014-146158 A (TOYOTA HOME KK) 14 August 2014 (2014-08-14)<br>entire text, all drawings | 1-9 |
| A | JP 6-004512 A (SHIMIZU CONSTRUCTION CO LTD) 14 January 1994 (1994-01-14)<br>entire text, all drawings | 1-9 |
| A | JP 8-068688 A (FUJITSU LTD) 12 March 1996 (1996-03-12)<br>entire text, all drawings | 1-9 |
| A | JP 2006-260370 A (TOKYO ELECTRIC POWER CO INC) 28 September 2006 (2006-09-28)<br>entire text, all drawings | 1-9 |

Form PCT/ISA/210 (second sheet) (January 2015)

**INTERNATIONAL SEARCH REPORT**
Information on patent family members

International application No.

**PCT/JP2022/023541**

| Patent document cited in search report | | | Publication date (day/month/year) | Patent family member(s) | Publication date (day/month/year) |
|---|---|---|---|---|---|
| CN | 108895940 | A | 27 November 2018 | (Family: none) | |
| JP | 63-228034 | A | 22 September 1988 | (Family: none) | |
| JP | 2017-199260 | A | 02 November 2017 | (Family: none) | |
| JP | 2018-165774 | A | 25 October 2018 | (Family: none) | |
| JP | 2016-20841 | A | 04 February 2016 | (Family: none) | |
| JP | 2017-40128 | A | 23 February 2017 | (Family: none) | |
| JP | 2014-146158 | A | 14 August 2014 | (Family: none) | |
| JP | 6-004512 | A | 14 January 1994 | (Family: none) | |
| JP | 8-068688 | A | 12 March 1996 | (Family: none) | |
| JP | 2006-260370 | A | 28 September 2006 | (Family: none) | |

Form PCT/ISA/210 (patent family annex) (January 2015)

**EP 4 411 331 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3149485 U